(19) **Europäisches Patentamt / European Patent Office / Office européen des brevets**

(11) **EP 4 485 363 A1**

(12) **EUROPEAN PATENT APPLICATION**

(43) Date of publication:
**01.01.2025  Bulletin 2025/01**

(21) Application number: **23181364.3**

(22) Date of filing: **26.06.2023**

(51) International Patent Classification (IPC):
*G06T 11/00* *(2006.01)*

(52) Cooperative Patent Classification (CPC):
**G06T 11/005;** G06T 2211/448

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
- **SOSSIN, Artur**
  **Eindhoven (NL)**
- **DAERR, Heiner**
  **Eindhoven (NL)**
- **BRENDEL, Bernhard Johannes**
  **5656AG Eindhoven (NL)**
- **THRAN, Axel**
  **Eindhoven (NL)**

(74) Representative: **Philips Intellectual Property & Standards**
**High Tech Campus 52**
**5656 AG Eindhoven (NL)**

(54) **TOMOGRAPHIC IMAGE DATA**

(57)    Proposed concepts thus aim to provide schemes, solutions, concept, designs, methods and systems pertaining to representing flux-dependent artefacts of tomographic image data. In particular, embodiments aim to provide a method for representing flux-dependent artefacts of tomographic image data by processing the tomographic projection data, in which unwanted flux dependent artefacts can be more easily detected than in image data. Artefact data can thus be generated by processing the tomographic projection data. The artefact data can then be used along with the projection data to generate an artefact map which represents the flux-dependent artefacts in at least a portion of tomographic image data. The tomographic image data corresponds to a reconstruction of the said tomographic projection data. In other words, the tomographic image data is data generated via the reconstruction of the tomographic projection data.

FIG. 1

**Description**

FIELD OF THE INVENTION

This invention relates to the field of flux-dependent artefacts in tomographic image data, and more specifically, to representing flux-dependent artefacts of tomographic image data.

BACKGROUND OF THE INVENTION

Multi-energy photon counting detectors classify x-ray photons transmitted through a given inspected object into a set of discrete energy windows (bins). This information allows the discerning and quantifying of materials comprising the respective object. This is achieved by a pixel-wise inversion of the system forward model, which describes the photon counts in individual bins as a function of a certain set (basis) of materials and their respective equivalent path lengths. This procedure is called basis material decomposition. The acquisition of quantitative material data puts strong requirements on the performance capabilities of a given X-ray system. The quantification accuracy can be compromised by two prominent effects: noise-induced bias and pile-up. These are both types of flux-dependent artefacts.

The pile-up effect is attributed to the case of high count-rates incident on the detector (overexposure), where it becomes no longer possible for the detector to discriminate between two subsequent count events. This in turn leads to count losses and count shifting towards higher energy bins. If not explicitly accounted for in the material decomposition (e.g. by a corresponding forward model), the pile-up effect will lead to quantification errors for the materials being estimated.

The noise induced bias on the other hand is attributed to the case of very low count-rates incident on the detector (photon starvation). Due to limited photon statistics, and the non-linearity of the basis material decomposition, a bias becomes prominent in the resulting quantitative material information.

Thus, for quantitatively accurate results, a photon counting detector must be operated with an X-ray flux level in a certain range that is neither too low (to avoid noise induced bias), nor too high (to avoid pile-up).

The impact of both pile-up and noise-induced bias on material quantification can be reduced by optimizing the scan protocol accordingly. However, it is commonly impossible to operate the X-ray or CT scanner such that pile-up and noise induced bias are both avoided for all acquired data, since the X-ray flux varies considerably not only within each acquired projection, but also over a CT scan. In other words, within one projection, the flux reaching some detector pixels will not be attenuated at all (only air in the beam), while for other detector pixels the flux could be attenuated even more than by an equivalent of 40 cm of water, which leaves only about 0.05% of the primary radiation for detection. This illustrates that both effects are functions of local scanned object attenuation, i.e. flux-dependent artefacts. However, after propagating through the process of image formation, making a proper judgement on the scanning parameters to reduce both pile-up and noise induced bias in certain selected regions of interest of the object being scanned is challenging.

SUMMARY OF THE INVENTION

The invention is defined by the claims.

According to examples in accordance with an aspect of the invention, there is provided a method for representing flux-dependent artefacts of tomographic image data.

The method comprises: obtaining tomographic projection data; processing the tomographic projection data to generate artefact data; reconstructing the tomographic projection data together with the artefact data to generate an artefact map representing flux-dependent artefacts in at least a portion of tomographic image data.

Proposed concepts thus aim to provide schemes, solutions, concept, designs, methods and systems pertaining to representing flux-dependent artefacts of tomographic image data. In particular, embodiments aim to provide a method for representing flux-dependent artefacts of tomographic image data by processing tomographic projection data, in which unwanted flux dependent artefacts can be more easily detected than in image data. Artefact data can thus be generated by processing the tomographic projection data. The artefact data can then be used along with the projection data to generate an artefact map which represents the flux-dependent artefacts in at least a portion of tomographic image data. The tomographic image data corresponds to a reconstruction of said tomographic projection data. In other words, the tomographic image data is data generated via the reconstruction of the tomographic projection data.

In other words, it is proposed that by processing the tomographic projection data rather than the tomographic image data, the flux-dependent artefacts can be more easily detected, and artefact data describing the artefacts can be generated. This information can then be leveraged to generate an artefact map which represents the flux-dependent artefacts that will be present in a reconstruction of the tomographic projection data. Clinicians can then use this information to know where to expect artefacts in the tomographic image, and/or the information can be used to modify scan parameters in order to minimize the occurrence of these flux-dependent artefacts.

By processing the tomographic data in the projection domain, information pertaining to flux-dependent artefacts that will be present in a reconstructed image can be more easily generated and utilized. Flux-dependent artefacts are nearly impossible to detect in reconstructed image data, and thus, by processing the tomographic projection data, i.e., before it has been reconstructed, artefact data can be more easily generated and subsequently used to generate an artefact map. The artefact map is a representation, visual or otherwise, of flux-dependent artefacts in at least a portion of the tomographic image data. In other words, the artefact map represents the flux-dependent artefacts that would be present in a portion (or the entirety) of an image reconstructed from the tomographic projection data. The artefact map can then be used in conjunction with the tomographic image data to locate the flux-dependent artefacts present in the image data but hard or impossible to detect from the image data alone.

In a simple example, initial CT projection data can be obtained and then processed to generate artefact data. The initial CT projection data can then be reconstructed together with the artefact data to generate an artefact map representing flux-dependent artefacts (pile-up artefacts and/or noise-induced bias artefacts) in at least a portion of the initial CT image data. This information can then be utilized by a clinician so that they know where to expect the artefacts in the reconstructed CT image data, and/or the artefact map can be used to optimize a future CT scan of the same object/anatomy (e.g., the initial CT scan could be a 3D scout scan, and the future CT scan could be the final diagnostic scan of the same patient). The optimization of a future scan may be defined as the reduction in the number and/or intensity of flux-dependent artefacts.

This invention may be of particular use in CT imaging, cone beam CT imaging, and tomographic imaging from C-arm or O-arm setups. All these are forms of tomographic imaging and generate tomographic projection data which may include flux-dependent artefacts.

Ultimately, an improved method for representing flux-dependent artefacts of tomographic image data is provided.

In some embodiments, the artefact map may represent a spatial variation in the flux-dependent artefacts. This allows the artefact map to be used to locate the flux-dependent artefacts, for instance, in a traditionally reconstructed tomographic image based on the tomographic projection data. For example, the artefact map can be used to locate areas in a reconstructed image based on the tomographic projection data that have high-intensity flux-dependent artefacts and/or a large quantity of flux-dependent artefacts.

In some embodiments, processing the tomographic projection data to generate artefact data may comprise interpolating data of the tomographic projection data based on an artefact look-up table. This allows the processing of the tomographic projection data to be performed more efficiently. The use of a look-up table allows artefact data to be generated quicker as compared to calculating flux-dependent artefact quantities for the tomographic projection data every time.

In some embodiments, the artefact look-up table may comprise water effective path-lengths and corresponding flux-dependent artefact quantities. This allows the water effective path-lengths in the tomographic projection data to be used to efficiently determine flux-dependent artefact quantities. Once the look-up table has been calculated, it can simply be referred to rather than calculating it in full every time, thereby increasing the efficiency of the method.

In some embodiments, prior to interpolating data of the tomographic projection data, processing the tomographic projection data to generate artefact data may further comprise: processing the tomographic projection data with a first forward model to generate first processed data; processing the tomographic projection data with a second forward model to generate second processed data; and generating the artefact look-up table based on the first and second processed data. In other words, two forward models, for instance, one that considers flux-dependent artefacts and one that does not, can be used to generate a look-up table that quantifies pile-up artefacts and/or noise-induced bias artefacts. For instance, the tomographic projection data can first be processed to estimate material path lengths, e.g., effective water path lengths, and these lengths can be input into the two forward models. Alternatively, the raw projection data can be input into the models. While the forward model considering pile-up should generate data similar to the real measured data, the other forward model will generate data that would correspond to an ideal system without flux-dependent artefacts. Thus, by calculating the difference of the outputs of the two forward models, an indication of the impact of flux-dependent artefacts can be determined and a look-up table can be generated. Once the look-up table has been generated once, it may simply be used to generate artefact maps in the future without having to use the two forward models to generate a new look-up table every time.

In some embodiments, a flux-dependent artefact may comprise at least one of: a pile-up artefact; and a noise-induced bias artefact. These are the two types of flux-dependent physical/mathematical artefacts that can appear in tomographic imaging data, and the present invention can be used to generate an artefact map representing either or both.

In some embodiments, the artefact map may represent flux-dependent artefacts for all the tomographic image data. In other words, the artefact map may represent all flux-dependent artefacts present in an image reconstructed from all the tomographic projection data, i.e. the portion of tomographic image data is the entirety of the tomographic image data.

In some embodiments, the method may further comprise generating a visual representation of the artefact map.

This allows the artefact map to be used to aid clinicians in locating flux-dependent artefacts in a reconstructed image based on the tomographic projection data.

In some embodiments, the visual representation may comprise a heatmap. A heatmap provides an effective way to visualize and differentiate areas including flux-dependent artefacts from areas which do not. It may also provide an effective way to differentiate pile-up artefacts from noise-induced bias artefacts.

In some embodiments, the visual representation may comprise a transparent overlay. The visual representation, such as a heatmap, may, for example, be overlayed on top of a reconstructed image based on the tomographic projection data. This thus allows the flux-dependent artefacts in the reconstructed image to be easily identified while still allowing a clinician to view the reconstructed image (or whatever image the visual representation has been overlayed on top of). Transparent may be understood as partially translucent or partially transparent.

In some embodiments, the method may further comprise determining at least one scan parameter, based on the artefact map, for performing a tomographic scan of an object corresponding to the tomographic projection data. Once the artefact map has been generated, it can subsequently be used in determining a scan parameter of a future scan of the same object that was scanned in the original tomographic projection data. The object in question may be an anatomical object, such as an organ or tumor or bone, etc. The artefact map can then be used, for example, for patient-specific dose planning, and this may be done automatically. The scan parameter can be determined, for instance, to try and achieve more desirable future results, i.e., obtaining future tomographic projection data that would lead to a reconstructed image with fewer and/or less intense flux-dependent artefacts. E.g., the scan for parameter estimation could be a 3D scout scan of the patient, and the future scan the final diagnostic scan.

In some embodiments, the method may further comprise obtaining an indication of a region of interest in the object, and wherein determining at least one scan parameter may be further based on the indicated region of interest. An indicated region of interest (ROI) can be used in determining the scan parameter(s) to specifically optimize future results in the said region of interest. The region of interest may, for example, be a tumor in an organ. Optimizing scan parameters is made easier if not having to optimize results across the entire scan, but instead only in a region of interest. The optimization within the ROI may also be more effective if only having to consider the ROI as opposed to having to optimize the rest of the image too.

According to another aspect of the invention, there is provided a method of tomographic scan planning, the method comprising: any of the herein disclosed methods above; and determining an X-ray emission current, based on the artefact map, for performing a tomographic scan of an object corresponding to the tomographic projection data. Thus, there is provided a method capable of tomographic scan planning, utilizing the data within the artefact map in order to determine an X-ray emission current that can be used in a future tomographic scan to produce data with fewer and/or less-intense flux-dependent artefacts. In other embodiments, another scan parameter can be determined instead of or in addition to the X-ray emission current.

In some embodiments, determining at least one scan parameter may comprise: segmenting the artefact map; processing the segments of the artefact map to generate local weighting factors for each segment; and processing the artefact map to determine at least one scan parameter, based on the local weighting factors, for performing a tomographic scan of an object corresponding to the tomographic projection data. By segmenting the artefact map and generating local weighting factors for each segment, the diagnostic importance of, for example, the underlying anatomical structures within the artefact map can be considered, and the determining of the X-ray emission current can be tuned to provide the most benefit in areas of diagnostic importance. For instance, if the bone region is not of importance for diagnosis in a given protocol, the pixel values covering bone in the artefact maps can be down-weighted with a small factor in subsequent processing. In other embodiments, another scan parameter can be determined instead of or in addition to the X-ray emission current.

In some embodiments, the method may further comprise generating an artefact look-up table.

In some embodiments, processing the tomographic projection data to generate artefact data may comprise: processing the tomographic projection data with a first forward model to generate first processed data; processing tomographic projection data with a second forward model to generate second processed data; and wherein generating an artefact map may comprise: generating an artefact map representing flux-dependent artefacts in at least a portion of tomographic image data based on the first and second processed data.

This provides an alternative way to process the tomographic projection data. For instance, one of the forward models can be with flux-dependent artefacts and the other without. Then, for a given water effective path-length corresponding to a projection data element, an overall percentage of flux-dependent artefacts can be obtained based on both the first and second processed data. In other words, for example, one forward model can consider pile-up artefacts, and the other can neglect pile-up artefacts. The tomographic projection data can first be processed to estimate material path lengths, e.g., effective water path lengths, and these lengths can then be input into the two forward models. While the forward model considering pile-up should generate data similar to the real measured data, the other forward model will generate data that would correspond to an ideal system without pile-up. Thus, by calculating the difference of the outputs of the two forward models, an indication of the impact of pile-up can be determined, i.e., an artefact map can be generated.

According to another aspect of the invention, there is provided a computer program comprising code means for implementing the method of any herein disclosed method when said program is run on a processing system.

According to another aspect of the invention, there is provided a system for representing flux-dependent artefacts of tomographic image data. The system comprises: an input interface configured to: obtain tomographic projection data; and a process configured to: process the tomographic projection data to generate artefact data; and reconstruct the tomographic projection data together with the artefact data to generate an artefact map representing flux-dependent artefacts in at least a portion of tomographic image data.

In some embodiments, the artefact map may represent a spatial variation in the flux-dependent artefacts.

Thus, there may be proposed concepts for representing flux-dependent artefacts of tomographic image data, and this may be done based on the processing of tomographic projection data to generate artefact data, which can be used together with the projection data to generate an artefact map.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 is a simplified flow diagram of a method for representing flux-dependent artefacts of tomographic image data according to a proposed embodiment;

Fig. 2 is a more in-depth flow diagram of a method for representing flux-dependent artefacts of tomographic image data according to a proposed embodiment;

Fig. 3 is a more in-depth flow diagram of a method for representing flux-dependent artefacts of tomographic image data according to a proposed embodiment;

Fig. 4A is a flow diagram of a method of tomographic scan planning according to a proposed embodiment;

Fig. 4B is a more in-depth flow diagram of a method of tomographic scan planning according to a proposed embodiment;

Fig. 5 is a simplified block diagram of a system for representing flux-dependent artefacts of tomographic image data according to a proposed embodiment; and

Fig. 6 illustrates an example of a computer within which one or more parts of an embodiment may be employed.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to representing flux-dependent artefacts of tomographic image data. According to proposed concepts, a number of possible solutions may be implemented separately or jointly. That is, although these possible solutions may be described below separately, two or more of these possible solutions may be implemented in one combination or another.

Embodiments of the invention aim to provide a method for representing flux-dependent artefacts of tomographic image data. This can be achieved by processing tomographic projection data in order to generate artefact data which can be used, in combination with the projection data, to generate an artefact map representing flux-dependent artefacts in tomographic image data.

Proposed concepts thus aim to provide a method for representing flux-dependent artefacts of tomographic image data by processing the tomographic projection data, in which unwanted flux dependent artefacts can be more easily detected than in image data. Artefact data can thus be generated by processing the tomographic projection data. The artefact data can then be used along with the projection data to generate an artefact map which represents the flux-dependent artefacts in at least a portion of tomographic image data. The tomographic image data corresponds to a reconstruction of said tomographic projection data. In other words, the tomographic image data is data generated via the reconstruction of the tomographic projection data.

In other words, it is proposed that by processing the tomographic projection data rather than the tomographic image data, the flux-dependent artefacts can be more easily detected, and artefact data describing the artefacts can be generated. This information can then be leveraged to generate an artefact map which represents the flux-dependent artefacts that will be present in a reconstruction of the tomographic projection data. Clinicians can then use this information to know where to expect artefacts in the tomographic image, and/or the information can be used to modify scan parameters in order to minimize the occurrence of these flux-dependent artefacts.

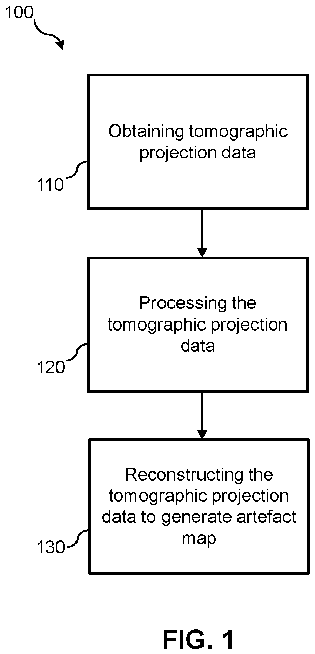

Referring now to Fig. 1, there is depicted a simplified flow diagram of a method 100 for representing flux-dependent artefacts of tomographic image data according to a proposed embodiment.

The method 100 begins with step 110 of obtaining tomographic projection data. The tomographic projection data may comprise CT projection data, spectral photon counting CT projection data, cone beam CT projection data, photon counting X-ray projection data, and/or tomographic projection data from C-arm or O-arm setups.

Step 120 comprises processing the tomographic projection data to generate artefact data. This may comprise inputting the tomographic projection data into a machine-learning algorithm, trained to predict, for tomographic projection data, artefact data describing at least one parameter of the tomographic projection data relating to flux-dependent artefacts. Alternatively, this may comprise processing the tomographic projection data with one or more forward models configured to output data describing flux-dependent artefacts or using a look-up table. Step 130 comprises reconstructing the tomographic projection data together with the artefact data to generate an artefact map representing flux-dependent artefacts in at least a portion of tomographic image data.

In this embodiment, the artefact map represents a spatial variation in the flux-dependent artefacts. This allows the artefact map to be used to locate the flux-dependent artefacts, for instance, in a traditionally reconstructed tomographic image based on the tomographic projection data. For example, the artefact map can be used to locate areas in a reconstructed image based on the tomographic projection data that have high-intensity flux-dependent artefacts and/or a large quantity of flux-dependent artefacts.

The flux-dependent artefacts comprise at least one of: a pile-up artefact; and a noise-induced bias artefact. These are the two types of flux-dependent physical/mathematical artefacts that can appear in tomographic imaging data, and the present invention can be used to generate an artefact map representing either or both. Pile-up artefacts mainly affect the borders of a scanned object, however, noise-induced bias artefacts mainly affect the inner part of a scanned object. Typically, intense pile-up artefacts occur in thin body parts like the neck or extremities, and noise-induced bias artefacts occur in larger body parts like the abdomen where pile-up in the borders can be reduced by a bowtie filter.

The opposite ways that pile-up and noise induced bias artefacts affect the image of an object illustrates the helpfulness of a method which can generate an artefact map representing flux-dependent artefacts in tomographic image data. The information provided in the artefact map can be used to for patient-specific dose planning based on a 3D scout scan, i.e. a scan to generate the tomographic projection data. This planning can be done automatically by the system or by user interaction.

In this embodiment, the artefact map represents flux-dependent artefacts for all the tomographic image data. In other words, the artefact map represents all flux-dependent artefacts that would be present in an image reconstructed from all the tomographic projection data. In other words, the portion of tomographic image data is the entirety of the tomographic image data. In other embodiments, however, the portion of tomographic image data may not be the entirety of the tomographic image data.

Method 100 therefore provides a method for representing local levels of pile-up and/or noise-induced bias in the results of, for example, an x-ray scan.

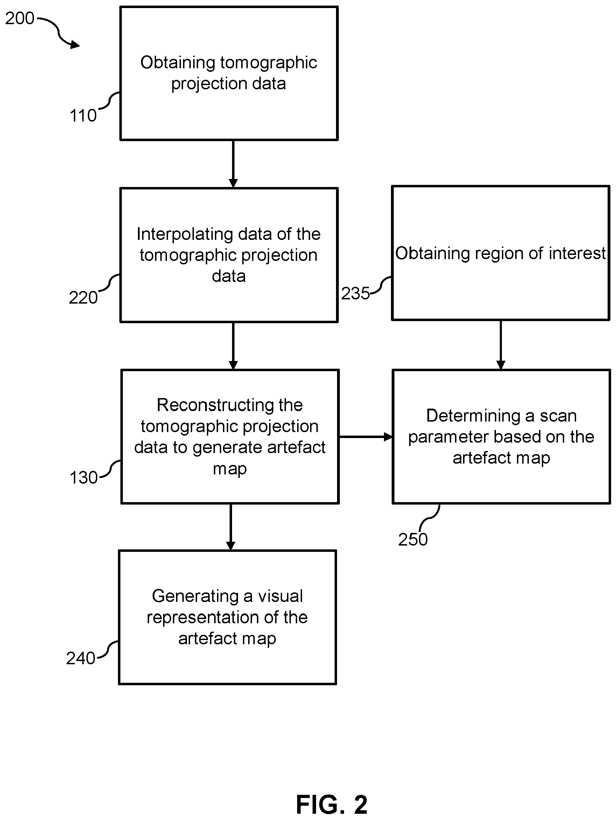

Referring now to Fig. 2, there is depicted a more in-depth flow diagram of a method 200 for representing flux-dependent artefacts of tomographic image data according to a proposed embodiment. Steps 110 and 130 are substantially the same as have been described in relation to the method 100 in Fig. 1.

In step 220, data of the tomographic projection data is interpolated based on an artefact look-up table. This allows the processing of the tomographic projection data to be performed more efficiently. The use of a look-up table allows artefact data to be generated quicker as compared to calculating flux-dependent artefact quantities for the tomographic projection data every time. In this embodiment, the artefact look-up table comprises water effective path-lengths and corresponding flux-dependent artefact quantities. This allows the water effective path-lengths in the tomographic projection data to be used to efficiently determine flux-dependent artefact quantities. Once the look-up table has been calculated, it can simply be referred to rather than calculating it in full every time, thereby increasing the efficiency of the method. In other embodiments, any artefact look-up table that is suitable for generating artefact data may be used, however. For example, in other embodiments, the look-up table can be configured to receive native measured data as input and to output artefact data.

In other words, to speed-up the process of flux-dependent artefact calculations, such as a pile-up percentage calculations, a look-up table of a certain subset of water effective path-lengths (or native measured data) and corresponding pile-up percentages can be constructed. Then for the actual data, the pile-up levels can be obtained via a straightforward interpolation, e.g. a cubic spline.

In step 240, a visual representation of the artefact map is generated. This allows the artefact map to be used to aid clinicians in locating flux-dependent artefacts in a reconstructed image based on the tomographic projection data. In this embodiment, the visual representation comprises a heatmap. A heatmap provides an effective way to visualize and differentiate areas including flux-dependent artefacts from areas which do not. It may also provide an effective way to differentiate pile-up artefacts from noise-induced bias artefacts. In other embodiments, however, other suitable visual representations may be used.

In this embodiment, the heatmap is a transparent overlay, which, for example, can be overlayed on top of a reconstructed image based on the tomographic projection data. This thus allows the flux-dependent artefacts in the reconstructed image to be easily identified while still allowing a clinician to view the reconstructed image. The visual representation may also be overlayed on other images. Transparent may be understood as partially translucent or partially transparent.

In some embodiments, the artefact map can be further processed to specifically highlight areas with too high a number or intensity of flux-dependent artefacts, thereby allowing a clinician, for example, to be warned of potential inaccuracies.

In step 235, an indication of a region of interest (ROI) in an object is obtained. In step 250, at least one scan parameter is determined, based on the artefact map and the indicated ROI, for performing a tomographic scan of an object corresponding to the tomographic projection data. An ROI can be used in determining the scan parameter(s) to specifically optimize future results in said ROI. The ROI may, for example, be a tumor in an organ. Optimizing scan parameters is made easier if not having to optimize results across the entire scan, but instead only in a ROI. The optimization within the ROI may also be more effective if only having to consider the ROI as opposed to having to optimize the rest of the image too.

The indication of a ROI may be obtained from a user or it may be obtained automatically, for instance, based on automatic segmentation of tomographic image data. The user can specify at least one ROI in the object-being-scanned for which quantitative accuracy is important. Based on this indicated ROI, scan parameters can thus be automatically determined to achieve optimal results within the one or more ROI(s).

In other embodiments, step 235 may be skipped. In other words, in other embodiments, at least one scan parameter may be determined based on the artefact map without an indicated region of interest. That is, step 250 may be performed based only on the artefact map. Once the artefact map has been generated, it can subsequently be used in determining a scan parameter of a future scan of the same object that was scanned in the original tomographic projection data. The object in question may be an anatomical object, such as an organ or a tumor. The artefact map can then be used, for example, for patient-specific dose planning, and this may be done automatically. The scan parameter can be determined, for instance, to try and achieve more desirable future results, i.e., obtaining future tomographic projection data that would lead to a reconstructed image with fewer and/or less intense flux-dependent artefacts.

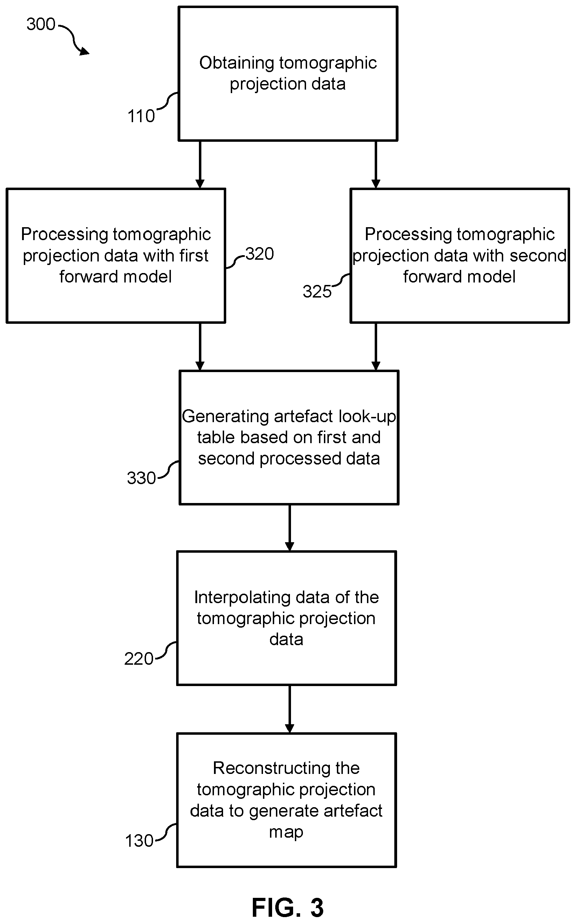

Referring now to Fig. 3, there is depicted a more in-depth flow diagram of a method 300 for representing flux-dependent artefacts of tomographic image data according to a proposed embodiment.

Steps 110, 130 and 220 are substantially the same as have been described in relation to methods 100 and 200 in Figs. 1 and 2 respectively.

In step 320, the tomographic projection data is processed with a first forward model to generate first processed data. In step 325, the tomographic projection data is processed with a second forward model to generate second processed data. In step 330, an artefact look-up table is generated based on the first and second processed data. In other words, two forward models, for instance, one that considers flux-dependent artefacts and one that does not, can be used to generate a look-up table that quantifies pile-up artefacts and/or noise-induced bias artefacts. The raw projection data can be input into these models. Alternatively, the tomographic projection data can first be processed to estimate material path lengths, e.g., effective water path lengths, in a step not shown and these lengths can be input into the two forward models instead. While the forward model considering pile-up should generate data similar to the real measured data, the other forward model will generate data that would correspond to an ideal system without flux-dependent artefacts. Thus, by calculating the difference of the outputs of the two forward models, an indication of the impact of flux-dependent artefacts can be determined and a look-up table can be generated. In other words, for a given water effective path-length corresponding to a projection data element, an overall percentage of flux-dependent artefacts can thus be obtained based on both the first and second processed data. Once the look-up table has been generated once, it may simply be used to generate artefact maps in the future without having to use the two forward models to generate a new look-up table every time.

For example, in order to visualize the effects of pile-up in a given X-ray scan, two forward models of the total acquired photon count number can be employed. One with ($F_p$) and another without (F) pile-up, respectively. Then, for a given water effective path-length $l_w$ corresponding to a scan data element $d$, the overall percentage of pile-up $p$ can be obtained via the following approach:

$$p(d) = \left(\frac{F_p(l_w(d))}{F(l_w(d))} - 1\right) \times 100\% \qquad (4)$$

The water-effective path length can be obtained via various methods, e.g. directly from the Beer-Lambert law with subsequent beam-hardening correction or empirical calibration-based methods. The result is a pile-up percentage map as a function of a given scan data element, i.e., an artefact map. The map can then be overlaid, e.g., in the form of a heat map, on the actual projection to showcase to the system operator, for example, whether certain anatomical ROIs exhibit substantial levels of pile-up.

In the case of a CT scan, the approach can be further extended by accounting for reconstruction. In this case, the pile up percentage $p$ as a function of image voxel $i$ can be expressed as follows:

$$p(i) = 100\% \times R\left\{\left(\frac{F_p(l_w(d,v))}{F(l_w(d,v))} - 1\right) l_w(d,v), i\right\} \qquad (5)$$

Note that the effective water path length sinogram $l_w(d,v)$ is weighted by the pile-up level (computed based on the forward models) of the respective pixel data element d and projection view v. Also note that due to multiplication with the sinogram data, one effectively ignores pile-up levels outside an object of interest due to water effective path lengths being close to zero.

For noise induced bias, a similar approach can be taken. The explanation in the following is based on the example of a material decomposition with photo effect and Compton scattering as basis materials, however, the approach is extendable to other material combinations and to more than two basis materials.

As for the pile-up effect, in a first step, the level of noise-induced bias must be determined. As an example, each water path length $l_w$ can be caused by certain clinically reasonable combinations of photo effect path lengths and Compton scattering path lengths. For a number of these combinations, the expectation values of the measured counts are calculated using the spectral forward model F (same as above). Noise can be added to these expectation values and then the noisy data can be decomposed. The noise-induced bias on the decomposed noisy data can then be determined. After this, the relative bias can then be determined by taking the ratio of the absolute bias value and of the ground truth path length. As a worst-case scenario, the maximal relative bias occurring over all combinations of photo effect and Compton scattering for a given water path length $l_w$ is assigned to this path length. Thus, for both photo effect and Compton scattering, look-up tables can be generated assigning to each water path length a relative photo effect bias and a relative Compton scattering bias. The look-up tables can then be used to generate artefact data relating to noise induced bias on material projections and in material images.

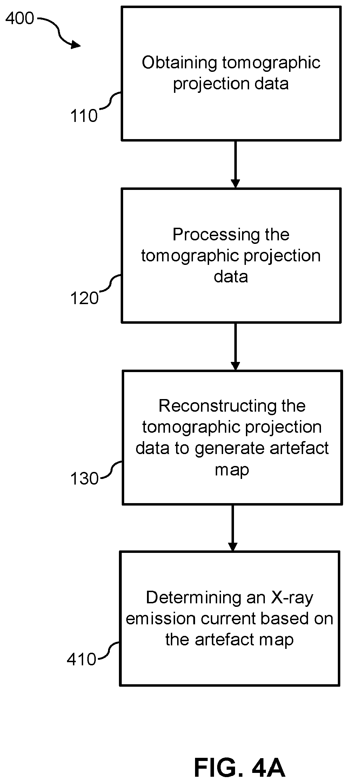

Referring now to Fig. 4A, there is depicted a flow diagram of a method 400 of tomographic scan planning according to a proposed embodiment. Steps 110, 120, and 130 are substantially the same as those described in relation to method 100 of Fig. 1.

In step 410, an X-ray emission current is determined, based on the artefact map, for performing a tomographic scan of an object corresponding to the tomographic projection data. Thus, there is provided a method 400 capable of tomographic scan planning, utilizing the data within the artefact map in order to determine an X-ray emission current that can be used in a future tomographic scan to produce data with fewer and/or less-intense flux-dependent artefacts. In other embodiments, another scan parameter can be determined in step 410 instead of or in addition to the X-ray emission current.

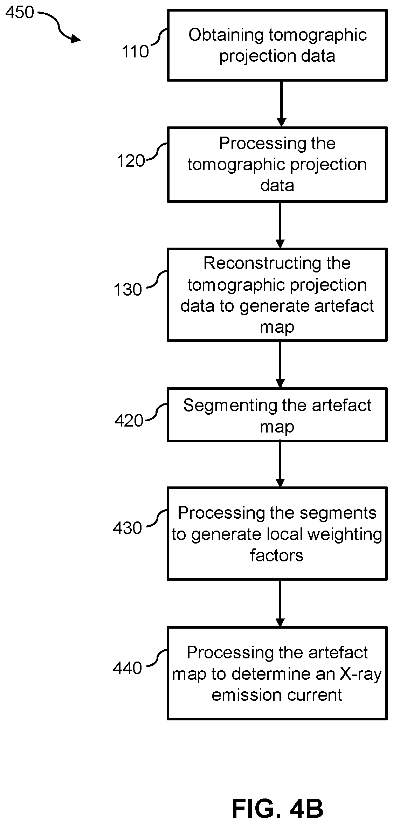

Referring now to Fig. 4B, there is depicted a more in-depth flow diagram of a method 450 of tomographic scan planning according to a proposed embodiment. Steps 110, 120, and 130 are substantially the same as those described in relation to method 100 of Fig. 1.

In step 420, the artefact map is segmented. For instance, this segmentation may be done based on anatomical structures of or within the artefact map. In some embodiments, the segmentation may be done automatically. In other embodiments, the segmentation may be done manually.

In step 430, the segments of the artefact map are processed to generate local weighting factors for each segment. In other words, the segments generated during the segmentation of step 420 are processed to determine local weighting factors for each segment, wherein the local weighting factors describe a relative diagnostic importance of the segment. The relative diagnostic importance of each segment may be based on a scanning protocol or a clinical context of the tomographic projection data.

In step 440, the artefact map is processed to determine an X-ray emission current, based on the local weighting factors, for performing a tomographic scan of an object corresponding to the tomographic projection data.

By segmenting the artefact map and generating local weighting factors for each segment, the diagnostic importance of, for example, the underlying anatomical structures within the artefact map can be considered, and the determining of the X-ray emission current can be tuned to provide the most benefit in areas of diagnostic importance. For instance, if the bone region is not of importance for diagnosis in a given protocol, the pixel values covering bone in the artefact maps can be down-weighted with a small factor in subsequent processing. In other embodiments, method 450 may be performed with another scan parameter instead of or in addition to the X-ray emission current, i.e., step 440 may be replaced with processing the artefact map to determine at least one scan parameter, based on the local weighting factors, for performing a tomographic scan of an object corresponding to the tomographic projection data.

As an example, an X-ray emission current may be determined in the following way. Tomographic projection data from a 3D scout scan using standard dose planning from conventional CT can be used to generate an artefact map as a starting point. Based on pile-up and noise-induced bias metrics respectively, i.e. the artefact map, the first standard planning is evaluated. In situations in which the metrics are accepted, i.e. the artefact map shows acceptable levels of flux-dependent artefacts, then an X-ray emission current (or another scan parameter) does not need to be determined. In cases in which the artefact map is not acceptable, the intensity and/or frequency of flux-dependent artefacts can be reduced, for example, by a combined metric by changing the X-ray emission current.

An example metric for pile-up $M_p$ and noise-induced bias $M_n$ could be the sum or the squared sum over all pixel values in the corresponding artefact maps. For this, it is also possible to weight the pixel values before summation with local weighting factors considering the diagnostic importance of the underlying anatomical structures, based on an automatic segmentation and the chosen scan protocol. If, e.g., the bone region is not of importance for diagnosis in a given protocol, the pixel values covering bone in the noise induced bias maps could be down-weighted with a small factor in the summation of the noise induced bias metric (the same holds for the pile-up metric, but pile-up rarely occurs in bone regions). Also, pile-up and noise-induced bias might have different weights in the summation. In other words, the pixel values within an indicated ROI can be given more weight. As the combined metric $M$, a weighted sum (1), a weighted sum of squared numbers (2), and/or a weighted sum of absolute numbers (3) of the two metrics can be used:

$$M = w_p * M_p + w_n * M_n \qquad (1)$$

$$M = w_p * M_p^2 + w_n * M_n^2 \qquad (2)$$

$$M = w_p * \left| M_p \right| + w_n * \left| M_n \right| \qquad (3)$$

Of course, the impact of flux-dependent artefacts can also be reduced by additional correction steps in the imaging chain. While pile-up can be taken into account in material decomposition, the impact of noise-induced bias can be reduced by down-sampling or denoising of the acquired projection data before material decomposition. However, both effects lower the quality of the acquired data and therefore such correction steps cannot fully compensate the impact of sub-optimal acquisition parameters. Thus, even when using such correction methods, it is still beneficial to determine at least one scan parameter, such as an X-ray emission current, that would facilitate a tomographic scan with fewer and/or less-intense flux-dependent artefacts.

According to another aspect of the invention, there is provided a computer program comprising code means for implementing the method of any herein disclosed method when said program is run on a processing system.

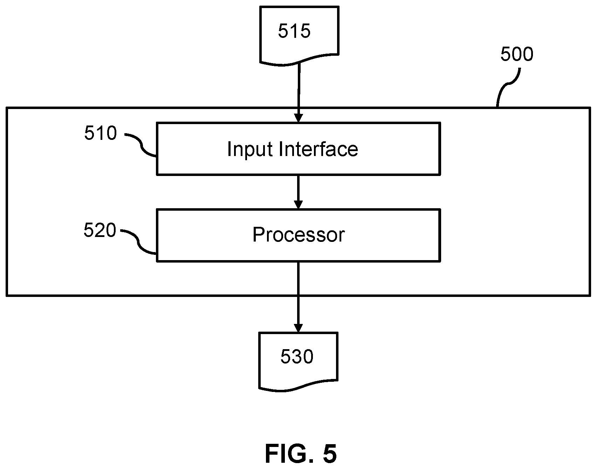

Referring now to Fig. 5, there is depicted a system 500 for representing flux-dependent artefacts of tomographic image data according to a proposed embodiment. The system 500 comprises an input interface 510 and a processor 520.

The system 500 is configured to generate an artefact map representing flux-dependent artefacts in at least a portion of tomographic image data by processing inputs 515. The inputs 515 comprise tomographic projection data. The input interface 510 obtains the inputs 515 and the processor 520 is configured to process the tomographic projection data to generate artefact data. The processor 520 is also configured to subsequently reconstruct the tomographic projection data together with the artefact data to generate an artefact map representing flux-dependent artefacts in at least a portion of tomographic image data. In other words, the output 530 comprises an artefact map representing flux-dependent artefacts in at least a portion of tomographic image data. In some embodiments, the artefact map may represent a spatial variation in the flux-dependent artefacts. In some embodiments, the processor 520 may comprise a first neural network.

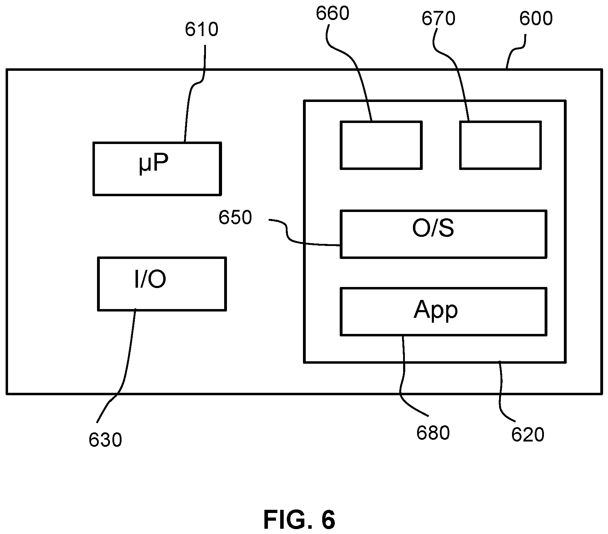

Fig. 6 illustrates an example of a computer 600 within which one or more parts of an embodiment may be employed. Various operations discussed above may utilize the capabilities of the computer 600. In this regard, it is to be understood that system functional blocks can run on a single computer or may be distributed over several computers and locations (e.g. connected via internet).

The computer 600 includes, but is not limited to, PCs, workstations, laptops, PDAs, palm devices, servers, storages, and the like. Generally, in terms of hardware architecture, the computer 600 may include one or more processors 610, memory 620 and one or more I/O devices 630 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 610 is a hardware device for executing software that can be stored in the memory 620. The processor 610 can be virtually any custom made or commercially available processor, a central processing unit (CPU), a digital signal processor (DSP), or an auxiliary processor among several processors associated with the computer 600, and the processor 610 may be a semiconductor based microprocessor (in the form of a microchip) or a microprocessor.

The memory 620 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 620 may incorporate electronic, magnetic, optical, and/or other types of storage media. Note that the memory 620 can have a distributed architecture, where various components are situated remote from one another, but can be accessed by the processor 610.

The software in the memory 620 may include one or more separate programs, each of which comprises an ordered listing of executable instructions for implementing logical functions. The software in the memory 620 includes a suitable operating system (O/S) 650, compiler 660, source code 670, and one or more applications 680 in accordance with exemplary embodiments. As illustrated, the application 680 comprises numerous functional components for implementing the features and operations of the exemplary embodiments. The application 680 of the computer 600 may represent various applications, computational units, logic, functional units, processes, operations, virtual entities, and/or modules in accordance with exemplary embodiments, but the application 680 is not meant to be a limitation.

The operating system 650 controls the execution of other computer programs, and provides scheduling, input-output control, file and data management, memory management, and communication control and related services. It is contemplated by the inventors that the application 680 for implementing exemplary embodiments may be applicable on all commercially available operating systems.

Application 680 may be a source program, executable program (object code), script, or any other entity comprising a set of instructions to be performed. When a source program, then the program is usually translated via a compiler (such as the compiler 660), assembler, interpreter, or the like, which may or may not be included within the memory 620, so as to operate properly in connection with the O/S 650. Furthermore, the application 680 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 630 may include input devices such as, for example but not limited to, a mouse, keyboard, scanner, microphone, camera, etc. Furthermore, the I/O devices 630 may also include output devices, for example but not limited to a printer, display, etc. Finally, the I/O devices 630 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 630 also include components for communicating over various networks, such as the Internet or intranet.

If the computer 600 is a PC, workstation, intelligent device or the like, the software in the memory 620 may further include a basic input output system (BIOS) (omitted for simplicity). The BIOS is a set of essential software routines that initialize and test hardware at start-up, start the O/S 650, and support the transfer of data among the hardware devices. The BIOS is stored in some type of read-only-memory, such as ROM, PROM, EPROM, EEPROM or the like, so that the BIOS can be executed when the computer 600 is activated.

When the computer 600 is in operation, the processor 610 is configured to execute software stored within the memory 620, to communicate data to and from the memory 620, and to generally control operations of the computer 600 pursuant to the software. The application 680 and the O/S 650 are read, in whole or in part, by the processor 610, perhaps buffered within the processor 610, and then executed.

The application 680 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-4B, and the system of Fig. 6, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs).

Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 6 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

**Claims**

1. A method (100) for representing flux-dependent artefacts of tomographic image data:

    obtaining (110) tomographic projection data;
    processing the tomographic projection data (120) to generate artefact data; and
    reconstructing the tomographic projection data (130) together with the artefact data to generate an artefact map representing flux-dependent artefacts in at least a portion of tomographic image data.

2. The method of claim 1, wherein the artefact map represents a spatial variation in the flux-dependent artefacts.

3. The method of any of claims 1 or 2, wherein processing the tomographic projection data to generate artefact data comprises:
   interpolating data of the tomographic projection data (220) based on an artefact look-up table.

4. The method of claim 3, wherein the artefact look-up table comprises water effective path-lengths and corresponding flux-dependent artefact quantities.

5. The method of claim 3 or 4, wherein, prior to interpolating data of the tomographic projection data, processing the tomographic projection data to generate artefact data further comprises:

> processing the tomographic projection data with a first forward model (320) to generate first processed data;
> processing the tomographic projection data with a second forward model (325) to generate second processed data; and
> generating the artefact look-up table (330) based on the first and second processed data.

6. The method of any prior claim, wherein a flux-dependent artefact comprises at least one of: a pile-up artefact; and a noise-induced bias artefact.

7. The method of any prior claim, wherein the artefact map represents flux-dependent artefacts for all the tomographic image data.

8. The method of any prior claim, further comprising generating a visual representation of the artefact map (240).

9. The method of claim 8, wherein the visual representation comprises a heatmap.

10. The method of any prior claim, further comprising:
determining at least one scan parameter (250), based on the artefact map, for performing a tomographic scan of an object corresponding to the tomographic projection data.

11. The method of claim 10, wherein the method further comprises:
obtaining an indication of a region of interest (235) in the object, and wherein determining at least one scan parameter is further based on the indicated region of interest.

12. A method of tomographic scan planning, the method comprising:

> the method of any of claims 1 to 11; and
> determining an X-ray emission current, based on the artefact map, for performing a tomographic scan of an object corresponding to the tomographic projection data.

13. The method of claim 10 or 11, wherein determining at least one scan parameter comprises:

> segmenting the artefact map;
> processing the segments of the artefact map to generate local weighting factors for each segment; and
> processing the artefact map to determine at least one scan parameter, based on the local weighting factors, for performing a tomographic scan of an object corresponding to the tomographic projection data.

14. A computer program comprising code means for implementing the method of any preceding claim when said program is run on a processing system.

15. A system (400) for representing flux-dependent artefacts of tomographic image data, the system comprising:

> an input interface (410) configured to:

>> obtain tomographic projection data (415); and
>> a processor (420) configured to:

> process the tomographic projection data to generate artefact data; and
> reconstruct the tomographic projection data together with the artefact data to generate an artefact map (430) representing flux-dependent artefacts in at least a portion of tomographic image data.

100

Obtaining tomographic
projection data

110

Processing the
tomographic projection
data

120

Reconstructing the
tomographic projection
data to generate artefact
map

130

## FIG. 1

200

110 — Obtaining tomographic projection data

220 — Interpolating data of the tomographic projection data

235 — Obtaining region of interest

130 — Reconstructing the tomographic projection data to generate artefact map

250 — Determining a scan parameter based on the artefact map

240 — Generating a visual representation of the artefact map

**FIG. 2**

300

```
┌─────────────────────────┐
│                         │
│   Obtaining tomographic │
│     projection data     │
│                         │
│  110                    │
└─────────────────────────┘
```

```
┌─────────────────────────┐        ┌─────────────────────────┐
│   Processing tomographic│        │   Processing tomographic│
│ projection data with first│ 320  │ projection data with second│
│      forward model      │        │      forward model      │
│                         │  325   │                         │
└─────────────────────────┘        └─────────────────────────┘
```

```
┌─────────────────────────┐
│ Generating artefact look-up│
│   table based on first and│
│    second processed data│
│                         │
│  330                    │
└─────────────────────────┘
```

```
┌─────────────────────────┐
│   Interpolating data of the│
│    tomographic projection│
│           data          │
│                         │
│  220                    │
└─────────────────────────┘
```

```
┌─────────────────────────┐
│     Reconstructing the  │
│   tomographic projection│
│  data to generate artefact│
│           map           │
│  130                    │
└─────────────────────────┘
```

FIG. 3

400

110 — Obtaining tomographic projection data

120 — Processing the tomographic projection data

130 — Reconstructing the tomographic projection data to generate artefact map

410 — Determining an X-ray emission current based on the artefact map

## FIG. 4A

450

110 — Obtaining tomographic projection data

120 — Processing the tomographic projection data

130 — Reconstructing the tomographic projection data to generate artefact map

420 — Segmenting the artefact map

430 — Processing the segments to generate local weighting factors

440 — Processing the artefact map to determine an X-ray emission current

## FIG. 4B

515

500

510 — Input Interface

520 — Processor

530

**FIG. 5**

**FIG. 6**

Europäisches
Patentamt

European
Patent Office

Office européen
des brevets

# EUROPEAN SEARCH REPORT

**Application Number**

EP 23 18 1364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RINKEL JEAN ET AL: "Correction for pile-up effect based on pixel-by-pixel calibration for tomography with Medipix3RX detector", PROCEEDINGS OF TECHNOLOGY AND INSTRUMENTATION IN PARTICLE PHYSICS 2014 - POS(TIPP2014), [Online] 3 July 2015 (2015-07-03), XP093112299, Trieste, Italy DOI: 10.22323/1.213.0212 | 1,2, 6-10,12, 14,15 | INV. G06T11/00 |
| A | * the whole document * | 3-5,11, 13 | |
| | ----- | | |
| A | US 2020/261050 A1 (BORNEFALK HANS [SE] ET AL) 20 August 2020 (2020-08-20) * paragraph [0105] - paragraph [0112] * | 1-15 | |
| | ----- | | |

|  | TECHNICAL FIELDS SEARCHED (IPC) |
|---|---|
|  | G06T |

The present search report has been drawn up for all claims

| Place of search | Date of completion of the search | Examiner |
|---|---|---|
| Munich | 14 December 2023 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 18 1364**

This annex lists the patent family members relating to the patent documents cited in the above-mentioned European search report.
The members are as contained in the European Patent Office EDP file on
The European Patent Office is in no way liable for these particulars which are merely given for the purpose of information.

**14-12-2023**

| Patent document cited in search report | Publication date | Patent family member(s) | | Publication date |
|---|---|---|---|---|
| US 2020261050 A1 | 20-08-2020 | CN | 113423342 A | 21-09-2021 |
| | | EP | 3923811 A1 | 22-12-2021 |
| | | JP | 7219888 B2 | 09-02-2023 |
| | | JP | 2022520241 A | 29-03-2022 |
| | | US | 2020261050 A1 | 20-08-2020 |
| | | WO | 2020167200 A1 | 20-08-2020 |

EPO FORM P0459

For more details about this annex : see Official Journal of the European Patent Office, No. 12/82